# EUROPEAN PATENT APPLICATION

(11) **EP 4 834 996 A1**
(43) Date of publication of application: **04.11.2026**
(21) Application number: 25173143.6
(22) Date of filing: 29.04.2025
(51) Int. Cl.: C08L 51/06, C08J 9/22, C08J 3/24

(54) **A METHOD FOR PREPARING A THERMOPLASTIC OR THERMOPLASTIC ELASTOMER COMPOSITION AND USE OF A REVERSIBLY CROSS-LINKED GRAFT POLYMER AS ADDITIVE**

(71) Applicant: L. Brüggemann GmbH & Co. KG, 74076 Heilbronn (DE)
(72) Inventor: GUIDUGLI, Nicola, 74076 Heilbronn (DE); LOMBARDI, Samuele, 74076 Heilbronn (DE)
(74) Representative: Prinz & Partner mbB

(57) **Abstract**

A method for preparing a thermoplastic or thermoplastic elastomer composition comprises the steps of: Providing a host thermoplastic or thermoplastic elastomer as component (A) and providing a reversibly crosslinked graft polymer as component (B). The reversibly crosslinked graft polymer is obtained by the reaction of (b1) a graft-functionalized polymer and (b2) a di- or polyfunctional nucleophilic crosslinker selected from the group of alcohols, thiols, amines or combinations thereof. The graft-functionalized polymer is a reaction product of a grafting agent having one or more carboxylic acid, anhydride, epoxy and/or isocyanate functional groups and a backbone polymer. Components (A) and (B) are mixed to form the thermoplastic or thermoplastic elastomer composition.

Further, a use of a reversibly crosslinked graft polymer as additive in a thermoplastic or thermoplastic elastomer composition is provided.

## Description

The present invention relates to a method of preparing a thermoplastic or thermoplastic elastomer composition comprising a reversibly cross-linked graft polymer and a use of a reversibly crosslinked graft polymer in such compositions.

Thermoplastics and thermoplastic elastomers are used in many fields of application based on their versatile mechanical properties and generally low cost of production. However, in applications at elevated temperatures, thermoplastics and thermoplastic elastomers show low dimensional stability and decreased mechanical properties which limit their application scenarios.

To make thermoplastics and thermoplastic elastomers more resilient against elevated temperatures and improve the mechanical properties of the materials, methods are known for modifying the polymer network by including crosslinks between different polymer chains within the polymer network. These methods include generation of crosslinks based on radical formation by using peroxides, a high energy electron beam or UV radiation. Another option is to form crosslinks based on silane grafting with subsequent moisture crosslinking. However, these processes are complicated, expensive and/or slow. Due to the high extent of crosslinking achieved with these known processes within the polymer network, the polymer will form a thermoset.

Another mechanism for forming crosslinks in polyolefins is described in WO 2009/114944 A1, which discloses a method of synthesizing a crosslinked polyolefin thermoset product. A melt stream of maleic anhydride functionalized reactive polyolefin wax and a melt stream of a polyamine are pumped through a static mixer at elevated temperatures. The resulting mixture is kept at a defined second temperature such that crosslinking between the maleic anhydride functionalized reactive polyolefin wax and the polyamine is induced to produce the crosslinked polyolefin thermoset product.

Though thermosets have good mechanical properties and are less sensitive to elevated temperatures than thermoplastics or thermoplastic elastomers, thermosets have the disadvantage that they cannot be recycled, remelted or reprocessed due to the irreversibly crosslinked polymer chains. Thus, there is the need either to accept worse mechanical properties while retaining a better recycling or reprocessing potential by using non-crosslinked thermoplastic or thermoplastic elastomer materials, or to improve mechanical properties at the cost of not being able to properly recycle or reprocess the material. The object of the invention is therefore to provide a solution for improving the resistance against and the mechanical properties of thermoplastics and thermoplastic elastomers at elevated temperatures, especially while keeping the possibility to recycle the material.

The object of the invention is solved by a method for preparing a thermoplastic or thermoplastic elastomer composition according to claim 1 and the use of a reversibly cross-linked graft polymer as additive in a thermoplastic or thermoplastic elastomer composition according to claim 15.

Further advantageous embodiments of the invention are defined in the dependent claims, whose features can be combined with each other.

The method for preparing a thermoplastic or thermoplastic elastomer composition according to the invention comprises the following steps:
- providing a host thermoplastic or thermoplastic elastomer as component (A);
- providing a reversibly crosslinked graft polymer as component (B), the graft polymer being obtained by the reaction of
   (b1) a graft-functionalized polymer, the graft-functionalized polymer being a reaction product of a grafting agent having one or more carboxylic acid, anhydride, epoxy and/or isocyanate functional groups and a backbone polymer; and
   (b2) a di- or polyfunctional nucleophilic crosslinker selected from the group of alcohols, thiols, amines or combinations thereof; and
- mixing components (A) and (B) to form the thermoplastic or thermoplastic elastomer composition.

The invention is based on the idea to use a reversibly crosslinked graft polymer within a host matrix formed by the host thermoplastic or thermoplastic elastomer. Termed differently, the reversibly crosslinked graft polymer is used as an additive to the host thermoplastic or thermoplastic elastomer to improve its properties, especially the mechanical properties at elevated temperatures.

By including carboxylic acid, anhydride, epoxy and/or isocyanate functional groups grafted to the backbone polymer, a reversible crosslinking mechanism is provided based on the grafted functional groups and the di- or polyfunctional nucleophilic crosslinker, such that the crosslinks between the polymer chains of the thermoplastic backbone polymer can be at least partially, especially completely, broken again if the thermoplastic or thermoplastic elastomer composition is to be recycled, remelted or reprocessed.

At the same time, by choosing a desired ratio of component (A) and component (B), the mechanical properties of the thermoplastic or thermoplastic elastomer composition can be adjusted in a highly flexible manner, thereby overcoming the problem that thermoplastic or thermoplastic elastomer compositions either have to be essentially fully crosslinked or not crosslinked at all.

### Component (A): Host thermoplastic or thermoplastic elastomer

The type of host thermoplastic or thermoplastic elastomer whose properties are to be improved by addition of the reversibly crosslinked graft polymer is not further restricted, as long as the reversibly crosslinked graft polymer can be mixed with the intended reversibly crosslinked graft polymer.

The host thermoplastic or thermoplastic elastomer can be selected from the group of polyolefin-based homo- and copolymers, (meth)acrylic copolymers, vinyl copolymers, styrene homo- and copolymers, thermoplastic vulcanizates, thermoplastic olefin elastomers, thermoplastic polyurethanes, thermoplastic polyamide elastomers, thermoplastic polyamides, thermoplastic polyester elastomers, thermoplastic polyesters and mixtures thereof.

The polyolefin-based homo- or copolymers are especially selected from the group of ethylene homopolymers (homo-PE), propylene homopolymers (homo-PP), ethylene-propylene copolymers, copolymers of ethylene with one or more C₄-C₂₀ α-olefin comonomer, especially selected from 1-butene, 1-hexene and 1-octene and combinations thereof, and mixtures thereof.

The polyolefin-based copolymers can be random or block copolymers.

The (meth)acrylic copolymers are especially selected from the group of ethylene (meth)acrylic copolymers, e.g. ethyl butyl acrylate copolymers.

The term "(meth)acrylic" and its synonyms signify here and hereinafter both derivatives of acrylic acid and methacrylic acid as well as mixtures thereof.

The vinyl copolymers may be selected from the group of ethylene vinyl copolymers, e.g. ethylene vinyl acetate copolymers.

Styrene homopolymers may be atactic, syndiotactic or isotactic styrene homopolymers.

The styrene copolymers can be selected from the group of polystyrene homopolymers, ethylene styrene copolymers, SIS (styrene isoprene styrene block copolymers), SEPS (hydrogenated styrene isoprene styrene block copolymers), SBS (styrene butadiene styrene block copolymers), SEBS (hydrogenated styrene butadiene copolymers), SBSS (styrene butadiene styrene styrene block copolymers), thermoplastic styrene block copolymers (TPS) and combinations thereof. TPS consist of at least a triblock copolymer with two styrene blocks forming hard segments on each end and an elastomeric block acting as soft segment, e.g. of polydiene or hydrogenated polydiene, between the styrene blocks.

Thermoplastic vulcanizates are a type of thermoplastic elastomers which are multiphasic materials composed of a rubber phase, which has been dynamically vulcanized, and a thermoplastic phase. E.g., the dynamically vulcanized rubber phase may be EPDM (ethylene propylene diene monomer rubber), and the thermoplastic phase may be a polypropylene homopolymer or copolymer.

Thermoplastics olefin elastomers (TPO) are a type of thermoplastic elastomers which are multiphasic materials composed of a non-vulcanized rubber phase, which has been dispersed into a thermoplastic phase. Examples for the rubber phase of thermoplastic olefin elastomers include EPR (ethylene propylene rubber) and SEBS (styrene ethylene butadiene styrene block copolymers), and examples for the thermoplastic phase are polypropylene homo- and copolymers.

The thermoplastic polyurethanes can be selected from the group of copolymers of polyethers or polyesters with polyurethanes, e.g. a block copolymer of a polyether or a polyester with a polyurethane.

The thermoplastic polyamide elastomers may be selected from copolymers of a polyamide and a polyether or a polyester. E.g., the thermoplastic polyamide elastomer can be a block copolymer of a polyether or a polyester with a polyamide, wherein the polyamide represents the hard phase and the polyether or the polyester represents the soft phase for increasing the elastic properties of the thermoplastic polyamide elastomer. The polyamide to be used can be but is not limited to PA6, PA66 as well as long chain aliphatic polyamides. The term "long chain aliphatic polymers" herein denotes aliphatic polymers obtained from aliphatic diamines with six or more carbon atoms, e.g. aliphatic diamines with six to 12 carbon atoms like PA12, PA6.10, PA6.12, and PA10.12.

Thermoplastic polyamides may be a polyamide of the types recited before for the thermoplastic polyamide elastomer.

The thermoplastic polyester elastomers may be a block copolymer of a polyester and a polyether.

The thermoplastic polyester can be selected from aliphatic, semi-aromatic and/or fully aromatic thermoplastic polyesters.

The type of host thermoplastic or thermoplastic elastomer determines what is to be considered to be a high or elevated temperature for the given thermoplastic or thermoplastic elastomer composition. A high temperature may be considered as a temperature of above the melting temperature of the respective host thermoplastic or thermoplastic elastomer, e.g. a temperature of at least 10 °C above the melting temperature. The addition of the reversibly crosslinked graft polymer allows to exceed the melting temperature of the pure host thermoplastic or thermoplastic elastomer.

In a variant, the host thermoplastic or thermoplastic elastomer can comprise or consist of a graft-functionalized host thermoplastic or thermoplastic elastomer, especially wherein the graft-functionalized host thermoplastic or thermoplastic elastomer is grafted with carboxylic acid, anhydride, epoxy and/or isocyanate functionalities, especially with carboxylic acid and/or anhydride functionalities. In this way, new crosslinks can be formed between the polymer chains of the reversibly crosslinked graft polymer of component (B) and the graft-functionalized host thermoplastic or thermoplastic elastomer of component (A), when components (A) and (B) are mixed and crosslinks within the reversibly crosslinked graft polymer of component (B) are partially dissolved, e.g. due to application of heat during the mixing.

The functionalities grafted to the graft-functionalized host thermoplastic or thermoplastic elastomer can be provided by reacting a host thermoplastic or thermoplastic elastomer with a grafting agent having one or more carboxylic acid, anhydride, epoxy and/or isocyanate functional groups, especially one or more carboxylic acid and/or anhydride functional groups, preferably with a grafting agent selected from the same types of grafting agent which can be used for obtaining the reversibly crosslinked graft polymer as component (B). Preferably, the same grafting agent is used for graft-functionalizing the host thermoplastic or thermoplastic elastomer and for obtaining the reversibly crosslinked graft polymer as component (B), e.g. maleic anhydride.

If the host thermoplastic or thermoplastic elastomer comprises or consists of a polyamide, the amino end groups of the respective polyamide can also contribute to the crosslinking behavior. Termed differently, polyamides can be used as reactive host thermoplastic or thermoplastic elastomer which can form crosslinks between the polymer chains of the reversibly crosslinked graft polymer of component (B) and the host thermoplastic or thermoplastic elastomer of component (A).

The host thermoplastic or thermoplastic elastomer may be a recycled material. E.g., the host thermoplastic or thermoplastic elastomer may be a post-consumer resin (PCR) obtained from domestic waste, household waste or end-of-life vehicle waste. By addition of the reversibly crosslinked graft polymer, the properties of thermoplastic or thermoplastic elastomer materials obtained from recycling streams, which typically have a deteriorated property profile compared to virgin materials, can be compensated for while ensuring that further reprocessing, recycling and/or remelting of the obtained thermoplastic or thermoplastic elastomer composition is possible.

### Component (B): Reversibly crosslinked graft polymer

The reversibly crosslinked graft polymer used as additive component (B) is obtained by the reaction of the graft-functionalized polymer (b1), and the di- or polyfunctional nucleophilic crosslinker (b2).

### Component (b1): Graft-functionalized polymer

The graft-functionalized polymer used to obtain the graft polymer is itself a reaction product of a grafting agent having one or more carboxylic acid, anhydride, epoxy and/or isocyanate functional groups, i.e. a group being capable of reacting with the di- or polyfunctional nucleophilic crosslinker (b2) to form crosslinks, with the thermoplastic backbone polymer. Termed differently, the backbone polymer is modified by including carboxylic acid, anhydride, epoxy and/or isocyanate functionalities which then provide the reaction sites for the desired crosslinking reaction with the di- or polyfunctional nucleophilic crosslinker (b2).

The grafting agent is selected such to provide the desired functional group, which is able to react in a reversible manner with the di- or polyfunctional nucleophilic crosslinker (b2), onto the backbone polymer.

Generally, every grafting agent can be used which can be grafted onto the chosen backbone polymer and provides at least one carboxylic acid, anhydride, epoxy and/or isocyanate functionality for the crosslinking reaction after being grafted to the backbone polymer.

Suitable grafting agents for providing one or more carboxylic acid functionalities onto the backbone polymer are malic acid, fumaric acid, (meth)acrylic acid and esters thereof.

The grafting agent for providing one or more anhydride functionalities onto the backbone polymer may be maleic anhydride, fumaric anhydride or esters thereof.

Grafting agents which can provide one or more epoxy functionalities onto the backbone polymer are epoxy-functional and ethylenically unsaturated hydrocarbons with 4 to 18 carbon atoms, like 3,4-epoxy-1-butene, 5,6-epoxy-hexene or glycidyl ethers, e.g. allylphenyl glycidyl ethers, allyl glycidyl ether or glycidyl (meth)acrylate derivatives like glycidyl methacrylate (GMA).

Suitable grafting agents for providing one or more isocyanate functionalities grafted to the backbone polymer are blocked or unblocked isocyanate-functional hydrocarbons with 10 to 18 carbon atoms, like benzyl isocyanates having an ethylenically unsaturated hydrocarbon residue with 3 to 10 carbon atoms, e.g. α,α -Dimethyl-meta-Isopropenyl-Benzyl-Isocyanate (known as well as TMI).

The one or more isocyanate functionalities introduced with the grafting agent to the backbone polymer may be partially or fully blocked. That is, the graft-functionalized polymer may comprise blocked isocyanate functionalities. The isocyanate functionality may be blocked already within the grafting agent or may be blocked after graft-functionalizing the backbone polymer. By using blocked isocyanate functionalities, the crosslinking reaction can be further controlled, as the reaction between the graft-functionalized polymer (b1) and the di- or polyfunctional crosslinker (b2) can be suppressed until the graft-functionalized polymer (b1) is heated to an activation temperature at which the isocyanate functionalities are released.

Preferably, the grafting agent has one or more carboxylic acid and/or anhydride functional groups which can be grafted to the backbone polymer.

The grafting agent may be selected from the group of maleic acid, fumaric acid, maleic anhydride, fumaric anhydride, (meth)acrylic acid, esters thereof and combinations thereof, especially selected from the group of maleic acid, fumaric acid, maleic anhydride, fumaric anhydride, esters thereof and combinations thereof.

Preferably, the grafting agent is maleic anhydride.

The backbone polymer preferably is a thermoplastic polymer such to improve compatibility with the host thermoplastic or thermoplastic elastomer of component (A).

The backbone polymer may be selected from the group of polyolefin-based homo- and copolymers, (meth)acrylic copolymers, vinyl copolymers and styrene homo- and copolymers.

The polyolefin-based homo- or copolymers are especially selected from the group of ethylene homopolymers (homo-PE), propylene homopolymers (homo-PP), ethylene-propylene copolymers, copolymers of ethylene with one or more C₄-C₂₀ α-olefin comonomer, especially selected from 1-butene, 1-hexene and 1-octene and mixtures thereof.

The polyolefin-based copolymers can be random or block copolymers.

The (meth)acrylic copolymers are especially selected from the group of ethylene (meth)acrylic copolymers, e.g. ethyl butyl acrylate copolymers.

The vinyl copolymers may be selected from the group of ethylene vinyl copolymers, e.g. ethylene vinyl acetate copolymers.

Styrene homopolymers may be atactic, syndiotactic or isotactic styrene homopolymers.

The styrene copolymers can be selected from the group of polystyrene homopolymers, ethylene styrene copolymers, SIS (styrene isoprene styrene block copolymers), SEPS (hydrogenated styrene isoprene styrene block copolymers), SBS (styrene butadiene styrene block copolymers), SEBS (hydrogenated styrene butadiene copolymers), SBSS (styrene butadiene styrene styrene block copolymers), thermoplastic styrene block copolymers (TPS) and combinations thereof. TPS consist of at least a triblock copolymer with two styrene blocks forming hard segments on each end an elastomeric block acting as soft segment, e.g. of polydiene or hydrogenated polydiene, between the styrene blocks.

The backbone polymer of component (B) is chosen such to be compatible with the host thermoplastic or thermoplastic elastomer of component (A). That is, the backbone polymer and the host thermoplastic or thermoplastic elastomer can be freely chosen as long as they can be mixed together to form the thermoplastic or thermoplastic elastomer composition. E.g., as the skilled person is aware based on his common technical knowledge, polyethylene homopolymers only have low miscibility with polypropylene homopolymers such that combinations of these materials as backbone polymer and host thermoplastic or thermoplastic elastomer, respectively, are not preferred. In contrast, combinations of a copolymer of ethylene with one or more C₄-C₂₀ α-olefin comonomer generally have high miscibility with other types of such copolymers and/or polypropylene such that respective combinations are preferred.

In one variant, the backbone polymer of component (B) and the host thermoplastic or thermoplastic elastomer of component (A) are chosen from the same type of polymer, e.g. both are polyolefin-based homo- or copolymers.

Methods for grafting the one or more carboxylic acid, anhydride, epoxy and/or isocyanate functionalities onto the backbone polymer with the grafting agent are known in the art. E.g., grafting may be realized by melt grafting, solid-phase grafting or liquid-phase grafting. Preferably, the graft-functionalized polymer is obtained by melt-grafting of the grafting agent and the backbone polymer with the addition of a radical initiator.

The amount of functionalities grafted onto the backbone polymer can be adjusted based on the amount of the grafting agent having one or more carboxylic acid, anhydride, epoxy and/or isocyanate functional groups added to the backbone polymer. E.g., from 0.1 to 1.5 wt.% of grafting agent may be reacted with the backbone polymer to obtain the graft-functionalized polymer (b1), based on the total weight of the backbone polymer, preferably from 0.2 to 1.0 wt.%.

### Component (b2): Di- or polyfunctional nucleophilic crosslinker

The di- or polyfunctional nucleophilic crosslinker (b2) is selected from the group of alcohols, thiols, amines or combinations thereof. Such crosslinkers show a fast and reversible reaction behavior with the carboxylic acid, anhydride, epoxy and/or isocyanate functionalities on the graft-functionalized polymer such to realize the desired reversible crosslinking behavior of the crosslinked graft polymer.

Dissolution of the crosslinks can be realized by heating the reversibly crosslinked graft polymer, e.g. by a heat treatment during recycling, reprocessing or remelting.

The di- or polyfunctional nucleophilic crosslinker (b2) is especially selected from the group of alcohols, amines or combinations thereof. By choosing alcohol- and amine-based crosslinkers rather than thiol-based crosslinkers, the strong odor of thiol-based crosslinkers can be avoided during preparation of the reversibly crosslinked graft polymer and in the thermoplastic or thermoplastic elastomer composition.

Preferably, the di- or polyfunctional nucleophilic crosslinker is chosen from the group of alcohols. Relying on alcohols as crosslinker further improves the color retention of the thermoplastic or thermoplastic elastomer composition.

The alcohol of the di- or polyfunctional nucleophilic crosslinker may be selected from the group of alditols, polyethylenglycols, linear diols having 2 to 10 carbon atoms, glycerol, dipentaerythritol, erythritol and combinations thereof.

The alcohol of the di- or polyfunctional nucleophilic crosslinker may also be a dendritic polyalcohol, such as the dendritic polyalcohols of the Boltorn product family available from Perstorp Holding AB.

The influence the graft-functionalized polymer has on the property profile of the thermoplastic or thermoplastic elastomer composition can be adjusted by changing the ratio of functional groups of the nucleophilic crosslinker to the carboxylic acid, anhydride, epoxy and/or isocyanate functional groups of the graft-functionalized polymer which influences the extent of crosslinking taking place.

E.g., the molar ratio of the nucleophilic crosslinker to the carboxylic acid, anhydride, epoxy and/or isocyanate functional groups grafted to the graft-functionalized polymer may be in the range of 0.01 : 1 to 30 : 1, preferably of from 0.2 : 1 to 2 : 1, more preferably of from 0.2 : 1 to 1.5 : 1.

Reaction scheme (1) shows an exemplary schematic crosslinking reaction between a maleic anhydride (MAH)-grafted backbone polymer (of which only part of the backbone chain is depicted for easier reference) and an alcohol-based difunctional nucleophilic crosslinker:

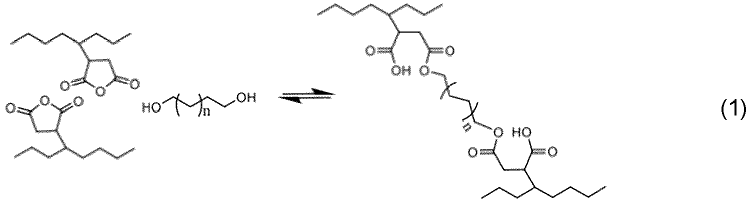

### Component (b3): Monofunctional nucleophilic modifying agent

To avoid scorching in the reversibly crosslinked graft polymer as a result of an excess level of crosslinks, the reversibly crosslinked graft polymer may have been obtained by the reaction of components (b1), (b2) and further a monofunctional nucleophilic modifying agent (b3) being selected from the group of alcohols, thiols, amines and combinations thereof.

Preferably, the monofunctional nucleophilic modifying agent (b3) is an alcohol.

The monofunctional nucleophilic modifying agent (b3) partially saturates the carboxylic acid-, anhydride-, epoxy- and/or isocyanate functional groups grafted on the backbone polymer, thereby partially blocking the sites which can be used for establishing crosslinks.

The monofunctional nucleophilic modifying agent (b3) can be reacted with the graft-functionalized polymer (b1) before adding the di- or polyfunctional nucleophilic crosslinker (b2) or together with di- or polyfunctional nucleophilic crosslinker (b2).

The molar ratio of the monofunctional nucleophilic modifying agent (b3) to the carboxylic acid, anhydride, epoxy and/or isocyanate functional groups grafted to the graft-functionalized polymer (b1) can be in the range of 0.01 : 1 to 0.2 : 1.

### Mixing of components (A) and (B)

Components (A) and (B) are mixed to form the thermoplastic or thermoplastic elastomer composition. Mixing can be realized by all known techniques which provides a thorough mixing of the components.

E.g., the mixing process may be realized by any processing technology known in the art for processing thermoplastics. Thus, the mixing process may be realized by, but is not limited to, extrusion molding, injection molding, blow-molding, or rotational molding.

The resulting melt may be used for an extrusion process or a molding process.

Preferably, components (A) and (B) are mixed together in a molten state, e.g. by melt-blending. In this way, a more homogeneous mixture can be realized. It is also possible that further crosslinks are created within the reversibly crosslinked graft polymer due to the application of heat. In case component (A) comprises a graft-functionalized host thermoplastic or thermoplastic elastomer or a reactive host thermoplastic or thermoplastic elastomer, further crosslinks between the reversibly crosslinked graft polymer of component (B) and the graft-functionalized host thermoplastic or thermoplastic elastomer of component (B) can be efficiently formed already during the mixing step. This allows to avoid additional crosslinking steps in the thermoplastic or thermoplastic elastomer composition obtained after the mixing step, thereby simplifying the preparation method.

Preferably, the crosslinking reaction between the graft-functionalized polymer (b1) and the di- or polyfunctional nucleophilic crosslinker (b2) is already completed after the mixing step such that no additional crosslinking step is necessary.

Mixing of components (A) and (B) may be done in a twin-screw extruder.

Components (A) and (B) can be mixed such that component (B) is present in an amount of from 1 to 99 wt.%, preferably from 2 to 95 wt.%, more preferably from 2 to 10 wt.% or from 30 to 70 wt.%, each based on the total weight components (A) and (B).

In one variant, the amount of component (B) is lower than the amount of component (A) in the thermoplastic or thermoplastic elastomer composition.

The thermoplastic or thermoplastic elastomer composition can consist of the mixed components (A) and (B).

It is also possible that further components are mixed together with components (A) and (B) to obtain the thermoplastic or thermoplastic elastomer composition, e.g. one or more further additives such as toughness modifiers, pigments, dies, antioxidants, UV stabilizers, flame retardants, processing aids, and adhesion promoters.

### Articles formed from the thermoplastic or thermoplastic elastomer composition

The type of article formed from the thermoplastic or thermoplastic elastomer composition is not further restricted.

The article may be an article formed by injection molding, blow-molding or rotational molding the thermoplastic or thermoplastic elastomer composition.

In one variant, the thermoplastic or thermoplastic elastomer composition is obtained as a foam. The foam may be obtained by foaming the thermoplastic or thermoplastic elastomer composition with a foaming agent like supercritical CO₂.

As foams comprise inner pores filled with air or gases, foams are especially sensitive to elevated temperatures which can cause deformation of the foam. By providing the thermoplastic or thermoplastic elastomer composition including the reversibly crosslinked graft polymer, the three-dimensional foam structure can be stabilized, even at elevated temperatures.

In another variant, the thermoplastic or thermoplastic elastomer composition is formed into an article being a substrate and a coating is applied onto the substrate, e.g. an acrylic coating. E.g., the thermoplastic or thermoplastic elastomer composition can be applied as a substrate for parts for automotive applications such as bumpers. Due to the good temperature resistance of the thermoplastic or thermoplastic elastomer composition, coatings formed on the thermoplastic or thermoplastic elastomer composition are resistant to changing environmental conditions like temperature and/or humidity changes, thereby avoiding surface defects or distortions otherwise leading to surface blistering.

In yet another variant, the thermoplastic or thermoplastic elastomer composition is formed into an article by an extrusion process. E.g., thermoplastic or thermoplastic elastomer composition can be extruded in different shapes like tubes, multilayer tubes or profiles. Due to the improved thermal resistances of the thermoplastic or thermoplastic elastomer compositions, tubes and profiles made out of this composition will show improved high temperature performance such as higher bursting pressure or load deflection curves.

### Use of the reversibly crosslinked graft polymer

The object of the invention is further solved by a use of a reversibly crosslinked graft polymer as additive in a thermoplastic or thermoplastic elastomer composition further comprising a host thermoplastic or thermoplastic elastomer, the reversibly crosslinked graft polymer being obtained by the reaction of
(b1) a graft-functionalized polymer, the graft-functionalized polymer being a reaction product of a grafting agent having one or more carboxylic acid, anhydride, epoxy and/or isocyanate functional groups and a backbone polymer; and
(b2) a di- or polyfunctional nucleophilic crosslinker selected from the group of alcohols, thiols, amines or combinations thereof.

The features and advantages of the reversibly cross-linked graft polymer as described before in relation to the method for preparing a thermoplastic or thermoplastic elastomer composition according to the invention apply for the reversibly cross-linked graft polymer for the use according to the invention, too, and vice versa, and it is referred to the explanations given above.

Further advantages and properties of the invention will become more apparent from the following examples and experimental results, which are not to be understood as limiting, and from the drawings. In the drawings:
- Fig. 1 shows FTIR spectra of non-crosslinked and crosslinked MAH-grafted C₂/C₈ polyolefin elastomers;
- Fig. 2 shows pictures of foams formed from thermoplastic or thermoplastic elastomer compositions obtained by a method according to the invention during creeping tests;
- Fig. 3 shows diagrams depicting the melt flow index of reversibly crosslinked graft polymers in dependence of the amount of added crosslinker;
- Fig. 4 shows diagrams depicting the elongation at break of reversibly crosslinked graft polymers in dependence of the amount of added crosslinker; and
- Fig. 5 shows diagrams of the melt flow index and the elongation at break reversibly crosslinked graft polymers during reprocessing steps.

### Measurement methods and definitions

Density is determined according to DIN EN ISO 1183.

The melt-flow index (MFI) has been determined according to DIN EN ISO 1133 at 190 °C and a weight of 2.16 kg, as far as nothing else is stated.

The Vicat softening temperature has been determined according to DIN EN ISO 306 using the A 50 procedure with a force of 10 N, as far as nothing else is stated.

The Peak melting temperature and Glass transition temperature has been determined by differential scanning calorimetry (DSC) by heating a sample to a temperature of 200 °C with a heating rate of 10 to 20 K/min.

Shore A hardness has been determined according to ASTM D2240.

Brittleness temperature has been determined according to DIN ISO 974.

Brookfield viscosity has been determined according to DIN ISO 1652.

Heat deflection temperature (HDT) has been determined according to DIN EN ISO 75-1,-2,-3.

Maximum tensile strength, elongation at break, stress at yield and Young's modulus have been measured according to DIN EN ISO 527-1/2. Charpy impact notched has been determined according to ISO 179-1.

### Synthesis of a reversibly crosslinked graft polymer

For the subsequent examples, thermoplastic backbone polymers have been modified with maleic anhydride (MAH) as grafting agent to obtain a thermoplastic MAH-grafted polymer. This process was aligned with the known state of the art for radical grafting of MAH. The grafting process can for example be carried out in the melt state using a twin screw compounder where the backbone polymer is fed in the main hopper of the twin screw compounder while the MAH, pre-mixed with a peroxide initiator, is added downstream in the molten polymer. The obtained graft-functionalized polymer is then pelletized, typically with an underwater pelletizer.

As backbone polymers, graft-functionalized polymers and host thermoplastic or thermoplastic elastomers, the following polymers have been used in the examples:
- a linear low-density polyethylene (LLDPE) having a density of 0.918 g/cm³, an MFI (190 °C, 2.16 kg) of 2 g/10 min, a Vicat softening temperature of 97 °C, and a Peak melting temperature at 121 °C;
- a low-density polyethylene (LDPE) having a density of 0.922 g/cm³, a MFI (190 °C, 2.16 kg) of 2 g/10 min and a Peak melting temperature at 111 °C;
- a C₂/C₈ polyolefin elastomer copolymer (POE-1), which is an ethylene-octene metallocene copolymer having a MFI (230°C, 2.16 kg) of 2 g/10 min, a density of 0.87 g/cm³, a Shore A hardness of 75, a Peak melting temperature at 60 °C, a Vicat softening temperature of 39 °C and a brittleness temperature below or equal to -76 °C;
- a styrene-ethylene-butylene-styrene (SEBS), having 30 wt.% bound styrene, MFI (230 °C, 5 kg) of 6 g/10 min and a Brookfield viscosity (Xylene solvent, 20 wt.% of polymer) of 0.5 Pa.s;
- a MAH pre-grafted C₂/C₄-C₂/C₈ polyolefin elastomer mixture, known under the trade name of Compoline CO/PA02 and supplied by Auserpolimeri, having a MFI (230°C, 10 kg) of 30 g/10 min, a density of 0.875 g/cm³, a Glass transition temperature below -40 °C and a MAH grafting level of 0.5 wt.%, ;
- a post-consumer recycled polypropylene/ethylene propylene diene monomer rubber (PP/EPDM) coming from bumpers recycling having a tensile modulus of 1200 MPa, a tensile strength of 16 MPa , a Charpy impact notched at 23 °C of 40 kJ/m², a Vicat softening temperature (B 50) of 52 °C, a HDT/A (1.8 MPa) of 54 °C, a HDT/B (0.45 MPa) of 90 °C, a Peak melting temperature of 14°C, a MFI (230°C, 2.16 kg) of 14 cm³/10 min, a MFI (230°C, 2.16 kg) of 11 g/10 min, a shrinkage lengthwise / lateral of 1.2 % and 0.8%, respectively, (measured according to ISO 294-4) and a density of 0.97 g/cm³.

For the examples used for testing the behavior of the reversibly crosslinked graft polymer, the thermoplastic MAH-grafted polymer was then crosslinked in a second step by mixing the respective di- or polyfunctional nucleophilic crosslinker into the melt of the thermoplastic MAH-grafted polymer.

### Melt flow and tensile properties

Crosslinking of polymer chains is expected to lead to a decrease of the melt flow index (MFI) and elongation at break and to an increase in the tensile strength at yield, compared to the respective non-crosslinked base polymer.

Table 1 compares the melt flow index (MFI) of different MAH-grafted polymers before and after crosslinking.

In Examples 1 to 3, which use a linear low-density polyethylene backbone polymer, a strong effect of the crosslinker is observed, both for using PEG400 and glycerol as crosslinker, as no melt was produced in Examples 2 and 3 contrary to the non-crosslinked Example 1.

Examples 4 to 6 show the effect of an increasing amount of crosslinker for a MAH-grafted polyolefin elastomer. By increasing the ratio of functional groups of the crosslinker to the functional groups of the MAH-grafted polymer, the MFI can be further reduced, indicating the efficiency and higher level of crosslinking.

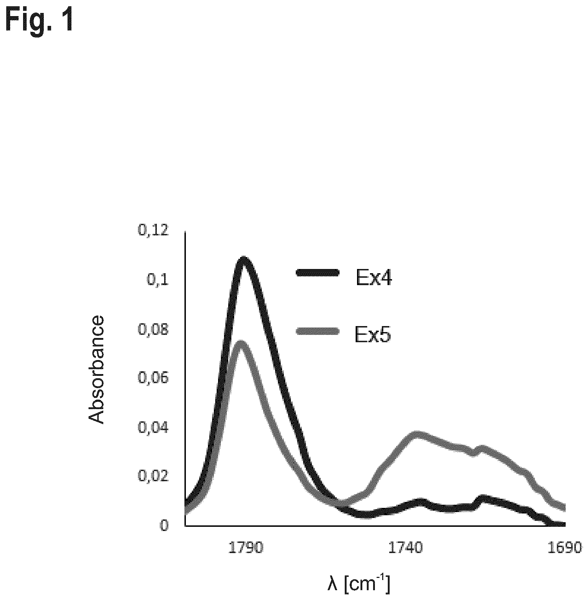

The reaction taking place during crosslinking can also be monitored by IR spectroscopy. Fig. 1 shows selected parts of the IR spectrum as measured by FTIR for Examples 4 and 5. The intensity of the band close to 1790 cm⁻¹, which is attributed to the anhydride functionality introduced by grafting MAH to the backbone polymer, is strongly reduced due to the crosslinking reaction taking place. At the same time, the intensity increase of the diffuse absorption band below 1740 cm⁻¹ demonstrates the formation of the ester groups formed by reaction of the anhydride functionality with the hydroxyl groups of the crosslinker.

Examples 7 and 8 further illustrate the effect of the crosslinker to lower the MFI for a MAH-grafted styrene copolymer (SEBS).

Examples 9 to 14 demonstrate the effect of the crosslinking on the tensile properties of the reversibly crosslinked graft polymer, both for samples tested at room temperature and at an elevated temperature of 50 °C. Especially for the high temperature measurements, a strong effect of the crosslinking is observed which results in a higher maximum tensile strength, higher stress at yield and lower elongation at break.

### Creeping tests

Examples 15 to 20 have been prepared as samples for creeping tests in the form of test bars of 2 cm starting length between holders of the test apparatus for creeping tests. A weight of 27 g has been attached to the lower end of the test bar for 15 min and the sample was subjected to the temperatures given in Table 3. Afterwards, the length of the test bar has been determined. Then, the weight has been removed and the test bar was allowed to relax at room temperature for 5 min and the length has been measured again.

From Examples 15 and 16, the effect of the crosslinker is clearly visible, as the high temperature resistance against tensile stress is improved. Instead of breaking already at 150 °C like reference Example 16 (corresponding to the pure LLPDE polymer), Example 15 breaks only at a test temperature of 250 °C.

Further reference is provided in Examples 17 and 18. Example 17 shows the behavior of a PEX sample, which has been a Shuan Ghua 4244A low-shrinkage silane grafted polyethylene crosslinked by moisture curing in the presence of a curing catalyst like DOTDL (dioctyltin dilaurate) or DMTDN (dimethylthiotoluene diamine). Thus, PEX, as a thermoset material, provides a benchmark for the tensile properties. Though high temperature resistance is achieved for Example 17, PEX is not reprocessable due to the irreversible crosslinks in the material.

Example 18 shows a HDPE reference sample (ExxonMobil^{™} HD 5001) without crosslinking which shows breakage even at a test temperature of 200 °C, i.e. at a temperature at which Example 15 is still stable, although a lower density PE has been used as backbone polymer in Example 15.

The effect of crosslinking is also demonstrated for a C₂/C₈ polyolefin elastomer copolymer (POE-1) with a density of 0.87g/cm³. Even at a temperature twice the temperature at which the non-crosslinked POE already shows breakage, the test specimen is stable.

**Table 1: Melt-flow behavior of graft-functionalized polymers and reversibly crosslinked grafted polymers.**

| Example | Polymer/crosslinked polymer | Backbone polymer | Grafting agent | Crosslinker | Molar ratio crosslinker : functional groups MAH | MFI (190 °C/ 2.16 kg) [g /10 min] |
|---|---|---|---|---|---|---|
| Ex1 | LLDPE | LLPDE | 0.7 wt.% MAH | - | - | 1.5 |
| Ex2 | LLDPE RT 10 PEG | LLPDE | 0.7 wt.% MAH | PEG400 | 0.035 : 1 | 0 |
| Ex3 | LLDPE RT 30 GLY | LLDPE | 0.7 wt.% MAH | Glycerol | 0.5 : 1 | 0 |
| Ex4 | POE-1 | POE | 0.5 wt.% MAH | - | - | 4 |
| Ex5 | POE-1 RT 20 DIP | POE | 0.5 wt.% MAH | Dipentaerythritol | 0.3 : 1 | 2.2 |
| Ex6 | POE-1 RT 40 DIP | POE | 0.5 wt.% MAH | Dipentaerythritol | 0.6 : 1 | 0.2 |
| Ex7 | SEBS | SEBS | 0.7 wt.% MAH | - | - | 23.5* |
| Ex8 | SEBS RT 30 GLY | SEBS | 0.7 wt.% MAH | Glycerol | 0.5 : 1 | 1.8* |

| | | | | | | |
|---|---|---|---|---|---|---|
| *: measured at 230 °C / 5 kg | | | | | | |

**Table 2: Mechanical properties of graft-functionalized polymers and reversibly crosslinked grafted polymers.**

| Example | Polymer/crosslinked polymer | Backbone polymer | Grafting agent | Crosslinker | Molar ratio crosslinker : functional groups MAH | Maximum tensile strength [MPa] | Elongation at break [%] | Stress at yield [MPa] | Young's Modulus [MPa] |
|---|---|---|---|---|---|---|---|---|---|
| Ex9 | POE-1 | POE | 0.5 wt.% MAH | - | - | 6.870 | 1,555.7 | 0.46 | 5.89 |
| Ex10 | POE-1 RT 30 GLY | POE | 0.5 wt.% MAH | Glycerol | 0.6 : 1 | 7.147 | 1,234.5 | 0.37 | 5.68 |
| Ex11 | POE-1 RT 60 GLY | POE | 0.5 wt.% MAH | Glycerol | 1.2 : 1 | 6.447 | 891.1 | 0.67 | 5.4 |
| Ex12 | POE-1 (50 °C) | POE | 0.5 wt.% MAH | - | - | 0.866 | 370.7 | 0.21 | 2.2 |
| Ex13 | POE-1 RT 30 GLY (50°C) | POE | 0.5 wt.% MAH | Glycerol | 0.6: 1 | 1.244 | 200.5 | 0.49 | 2 |
| Ex14 | POE-1 RT 60 GLY (50 °C) | POE | 0.5 wt.% MAH | Glycerol | 1.2 : 1 | 1.342 | 129.1 | 0.43 | 2.57 |

**Table 3: Creeping tests.**

| | Polymer/crosslinked polymer | Backbone polymer | Grafting agent | Crosslin ker | Molar ratio crosslinker: functional groups MAH | T (°C) | Original length (cm) | Elongation at end of the test (cm) | Length after relaxation (cm) | Remaining creeping |
|---|---|---|---|---|---|---|---|---|---|---|
| Ex15 | LLDPE RT 30 GLY | LLDPE | 0.7 wt.% MAH | Glycerol | 0.5 : 1 | 150 | 2 | 2.1 | 1.8 | 5% |
| | | | | | | 200 | 2 | 2.7 | 2.1 | 35 % |
| | | | | | | 250 | 2 | Break | - | - |
| Ex16 | LLDPE | | | - | - | 150 | 2 | Break | - | - |
| Ex17 | PEX | | | - | - | 200 | 2 | 2 | 1.6 | 0% |
| Ex18 | HPDE | | | - | - | 250 | 2 | 2.05 | 1.9 | 2% |
| | | | | | | 200 | 2 | Break | - | - |
| Ex19 | POE-1 RT 40 GLY | POE | 0.5 wt.% MAH | Glycerol | 0.9: 1 | 200 | 2 | 3 | 2.2 | 50 % |
| | | | | | | 230 | 2 | Break | - | - |
| Ex20 | POE-1 | - | - | - | - | 100 | 2 | Break | - | - |

### Properties of the thermoplastic or thermoplastic elastomer composition

The effect of using the reversibly crosslinked graft polymer as additive in a thermoplastic or thermoplastic elastomer composition is exhibited by the following Examples 21 to 25 in Tables 4 and 5, wherein Example 21 is a reference example of a pure C₂/C₄ polyolefin elastomer copolymer (POE-2) used as host polymer. The host polymer was not grafted and had an MFI (190 °C, 2.16 kg) of 1.2 g/10 min, a density of 0.862 g/cm³ and a melting point of 32 °C.

The same C₂/C₄ polyolefin elastomer copolymer was used for Examples 22 to 25 as host polymer. For Example 25, the C₂/C₄ polyolefin elastomer copolymer was used in a mixture with a further host polymer, which was chosen to be CO/PA02-g-MAH, i.e. a C₂/C₄-C₂/C₈ polyolefin elastomer mixture.

Addition of higher levels of the reversibly crosslinked graft polymer increases the high temperature performance as becomes evident from Examples 22 to 24 with 75 wt.%, 50 wt.% and 25 wt.%, respectively. However, all of these Examples show improvements over the pure POE-2 Example 21 which already breaks at a test temperature of 75 °C. At a high level of 75 wt.% component (A), excellent temperature stability up to 150 °C is observed, with an excellent elongation recovery up to 80 % from its original length after relaxation.

Example 25 shows the influence of loading a highly polyfunctional crosslinker (b2). The mixture was able to withstand a test temperature of 100 °C although only 50 wt.% of the total composition consisted of a reversibly crosslinked graft polymer, i.e. was a modified polymer. Further, Example 25 highlights that it is possible to provide additional functionalities like carboxylic acid and/or anhydride functionalities within the host polymer. That is, although an already crosslinked component (B) is added, new crosslinks can form between the host polymer chains and the polymer chains of the reversibly crosslinked graft polymer.

**Table 4: Thermoplastic or thermoplastic elastomer compositions for creeping tests.**

| | Component (A) | Component (B) | | | | | Composition Weight ratio (A) : (B) |
|---|---|---|---|---|---|---|---|
| | Host polymer | Crosslinked graft polymer (b1) | Backbone polymer | Grafting agent | Crosslinker (b2) | Ratio functional groups crosslinker : functional groups MAH | |
| Ex21 | POE-2 | - | - | | - | - | |
| Ex22 | POE-2 | POE-2 RT 60 GLY | POE | 0.5 wt.% MAH | Glycerol | 1.3 : 1 | 25 wt.% : 75 wt.% |
| Ex23 | POE-2 | POE-2 RT 60 GLY | POE | 0.5 wt.% MAH | Glycerol | 1.3 : 1 | 50 wt.% : 50 wt.% |
| Ex24 | POE-2 | POE-2 RT 60 GLY | POE | 0.5 wt.% MAH | Glycerol | 1.3 : 1 | 75 wt.% : 25 wt.% |
| Ex25 | POE-2 | POE-2 RT 150 DIP | POE | 0.5 wt.% MAH | Dipentaeryt hritol | 21 : 1 | 70 wt.% (50 wt.% POE + 20 wt.% COPA02-g-MAH) : 30 wt.% |
| | CO/PA02-g-MAH (0.5 wt.% MAH) | | | | | | |

**Table 5: Results of creeping tests.**

| | T [°C] | Original length [cm] | Elongation at end of the test [cm] | Length after relaxation [cm] | Elongation | Elongation recovery |
|---|---|---|---|---|---|---|
| Ex21 | 75 | 2 | Break | - | - | - |
| Ex22 | 100 | 2 | 2.44 | 2 | 22 % | 100 % |
| | 150 | 2 | 4.5 | 2.5 | 125 % | 80 % |
| Ex23 | 75 | 2 | 2.3 | 2 | 15 % | 100 % |
| | 100 | 2 | Break | - | - | - |
| | 150 | 2 | Break | - | - | - |
| Ex24 | 75 | 2 | 3.9 | 2 | 15 % | 100% |
| | 87.5 | 2 | Break | - | - | - |
| | 100 | 2 | Break | - | - | - |
| Ex25 | 100 | 2 | 3.1 | 1 | 55 % | 100 % |

### Foamed articles

Examples 26 and 27 of Table 6 show the effect of the reversibly crosslinked graft polymer of component (B) on the creeping performance of foamed articles formed by the method according to the invention.

Example 26 is a 70:30 (w/w) reference mixture of a low-density polyethylene (LDPE) and a low density polyethylene (LLDPE). The mixture has been extruded and foamed by supercritical CO₂.

Example 27 is a mixture in which the reference mixture of Example 26 is used as host thermoplastic and a reversibly crosslinked graft polymer has been added to obtain a 60:40 (w/w) mixture. The reversibly crosslinked graft polymer (named LLPDE RT 60 GLY) was a LLDPE-g-MAH with an MAH level of 0.7 wt.%, based on the total weight of the backbone polymer LLDPE, which has been crosslinked with 0.3 wt.% glycerol, based on the total weight of the backbone polymer LLDPE. The mixture has been extruded and foamed by supercritical CO₂ analogously to Example 26.

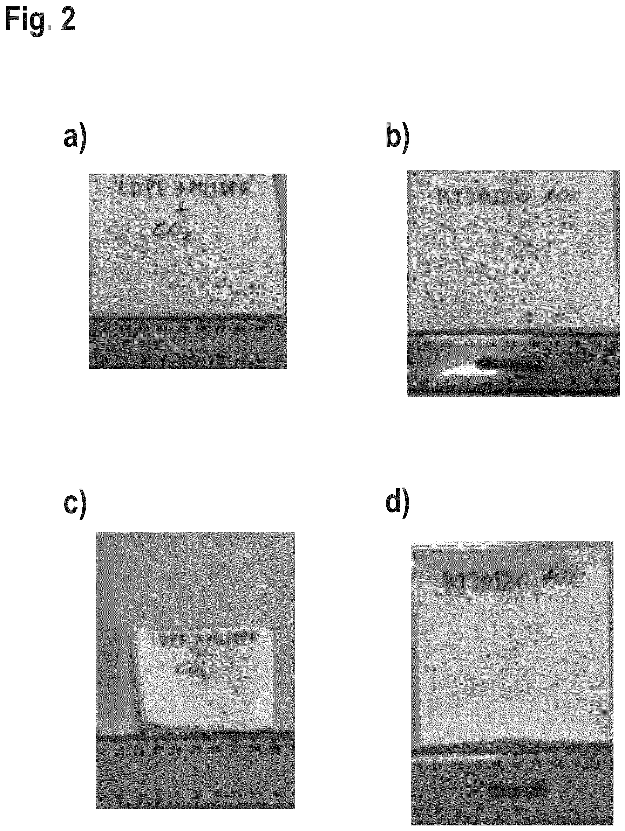

Table 6 shows the results of thermal tests applied to Examples 26 and 27. Also, Figs. 2 a) and c) show the foam as per Example 26 before and after the heating period while Figs. 2 b) and d) show the foam as per Example 27.

It is observed that the use of the reversibly crosslinked graft polymer substantially reduces the thermal shrinkage from 17.3 % down to 0.9 % for the shrinkage MD/CD (Machine direction/ Cross direction) compared to the non-crosslinked foam.

**Table 6: Thermal behavior of foamed samples.**

| | Ex26 | Ex27 |
|---|---|---|
| | LDPE/LLDPE | LDPE/LLDPE RT 60 GLY |
| Density [kg/m³] | 180 | 300 |
| Thickness | 1.2 - 1.3 mm | 1 mm |
| Thermal stability (24h, 100 °C) | SP = 64 % | SP = 64 % |
| | Shrinkage MD/CD = -17.3% | Shrinkage MD/CD = -0.9% |
| ISO 1798 | MD = 2.967 kPa / 70 % | MD = 3.348 kPa / 58 % |
| | CD = 1.621 kPa / 33 % | CD = 2.445 kPa /31 % |

### Use of recycled host polymers

Examples 28 to 30 have been prepared to test the effect of the reversibly crosslinked graft polymer on the surface blistering behavior of thermoplastic or thermoplastic elastomer compositions. Surface blistering is a well-known issue, e.g. when using materials used from recycling streams for forming bumpers for automotive applications, and is believed to be caused by migration of coating particulates or by a matrix shrinkage upon weathering.

As host polymer, a PP/EPDM thermoplastic elastomer was used. As reversibly crosslinked graft polymer, a polypropylene impact copolymer with a density of 0.905 g/cm³, an MFI (230°C, 2.16kg) of 0.3 g/10 min, a Peak melting temperature of 165 °C, a Vicat softening temperature (A 50) at 155 °C, a HDT (0.45 N) at 95 °C has been used, which has been grafted with 0.6 wt.% MAH, based on the total weight of the copolymer, and crosslinked with 0.6 wt.% glycerol.

**Table 7: Compositions for surface blistering tests.**

| | PP/EPDM | PPC RT60 GLY |
|---|---|---|
| Ex28 | 100 wt.% | - |
| Ex29 | 80 wt.% | 20 wt.% |
| Ex30 | 60 wt.% | 40 wt.% |

The PPC RT60 GLY was melt-blended with the post-consumer resin PP/EPDM in the ratios given in Table 7, and plates were produced by injection molding. Then, the plates have been spray coated with an acrylic based coating typically used in the automotive industry to obtain coated test plates. The coated test plates were subjected to the alternating climate testing scheme consisting of 25 subsequent steps defined in Table 8. Steps in which no values for temperature and humidity are given denote the time intervals which were used to shift from one condition to the next condition. E.g., in step 2, the temperature is raised from 23 °C to 95 °C over the course of 1 hour, while the relative humidity has been kept constant at 50 %.

**Table 8: Alternating climate testing scheme.**

| Step | Temperature [°C] | Relative humidity [%] | Time [hours] |
|---|---|---|---|
| 1 | 23 | 50 | 2 |
| 2 | | | 1 |
| 3 | 95 | | 15 |
| 4 | | | 2 |
| 5 | 85 | 60 | 3 |
| 6 | | | 1 |
| 7 | 23 | 50 | 2 |
| 8 | | | 1 |
| 9 | 85 | 15 | 15 |
| 10 | | | 2 |
| 11 | -30 | | 3 |
| 12 | | | 1 |
| 13 | 23 | 50 | 2 |
| 14 | | | 1 |
| 15 | 85 | 60 | 15 |
| 16 | | | 2 |
| 17 | -30 | | 3 |
| 18 | | | 1 |
| 19 | 23 | 50 | 2 |
| 20 | | | 1 |
| 21 | 85 | 15 | 9 |
| 22 | | | 2 |
| 23 | -30 | | 3 |
| 24 | | | 1 |
| 25 | 23 | 50 | 6 |
| Total | | | 240 |

After the alternating climate testing scheme, the coated test plates are visually inspected and the number of surface spots/defects are counted.

The host PP/EPDM polymer shows a lot of surface defects with a total count of 68 defects/cm². In contrast, the number of surface defects is lowered with increasing content of the reversibly crosslinked graft polymer with only 31 defects/cm² for Example 29 and even fewer 22 defects/cm² for Example 22.

Generally, by using the reversibly crosslinked graft polymer of component (B), a thermoplastic or thermoplastic elastomer composition can be prepared which shows improved resistance against elevated temperatures, good tensile properties and low creeping.

### Recyclability tests

To demonstrate the effect of remelting the reversibly crosslinked graft polymer, additional experiments have been conducted in which the behavior of the MFI and the elongation at break are investigated dependent on the level of crosslinking and over the course of several remelting steps.

As backbone grafted polymers, the following polymers have been used:
a) A blend (LLDPE-2) of 40 wt.% Compoline CO/LL05, which has a MFI (190 °C, 2.16 kg) of 1.8 g/10 min; a Peak Melting point at 120 °C, a density of 0.92 g/cm³, and 60 wt.% of Compoline CO/LL07 which has a MFI (190 °C, 2.16 kg) of 1.5 g/10 min; a Peak melting point at 124 °C and a density of 0.923 g/cm³. MAH grafting level was 0.7wt%.
b) A 50/50 (w/w) blend (POE-3) of Compoline CO/PA01 and CO/PA03 (POE-3), which are grafted C₂/C₄-C₂/C₈ polyolefin elastomer blends. Compoline CO/PA01 has a MFI (230°C, 10 kg) of 30 g/10 min, a density of 0.88 g/cm³, a glass transition below -30 °C, and a MAH grafting level of 0.7 wt.%. CO/PA03 has a MFI (230°C, 10 kg) of 35 g/10 min, a density of 0.87 g/cm³, a glass transition temperature below -50 °C and a MAH grafting level of 0.7 wt.%.

In a first step, the MFI values and the elongation at break have been determined for the reversibly crosslinked graft polymer as a function of the amount of crosslinker added during synthesis of the reversibly crosslinked graft polymer, wherein glycerin has been used as crosslinker.

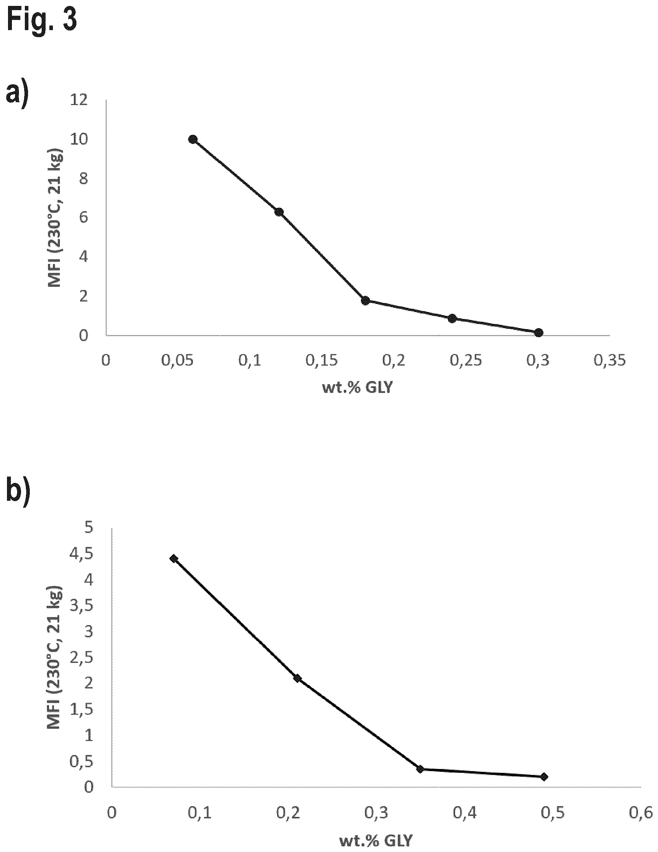

Fig. 3a shows the resulting MFI when LLDPE-2 is used as backbone polymer and Fig. 3b shows the resulting MFI when POE-3 is used as backbone polymer. In both cases, even very low amounts of crosslinker already result in a strong drop of the MFI. This data also highlights that the MFI can be finely tuned by choosing the respective amount of crosslinker.

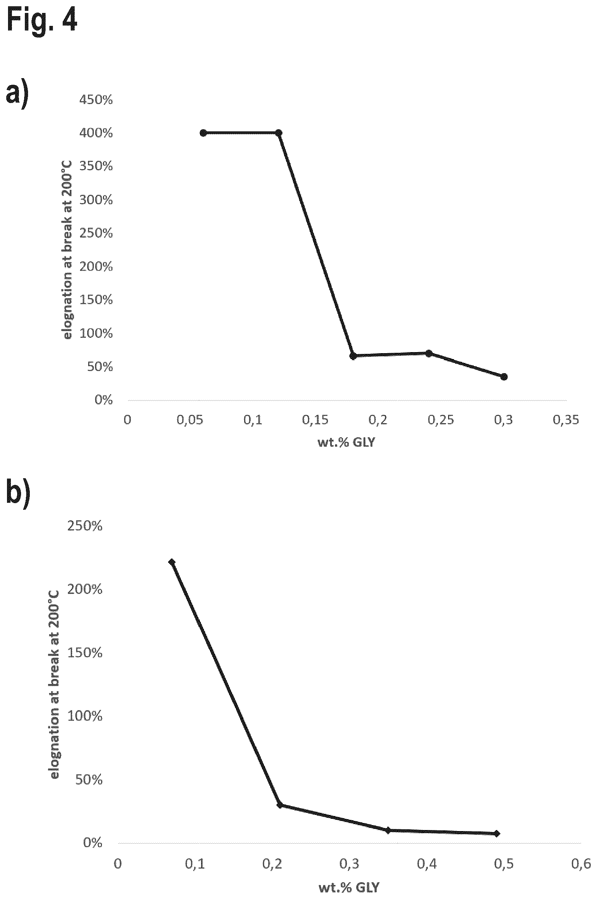

At the same time, the elongation at break also decreases, as is highlighted by the graphs depicted in Fig. 4a (LLDPE-2 as backbone polymer) and Fig. 4b (POE-3 as backbone polymer).

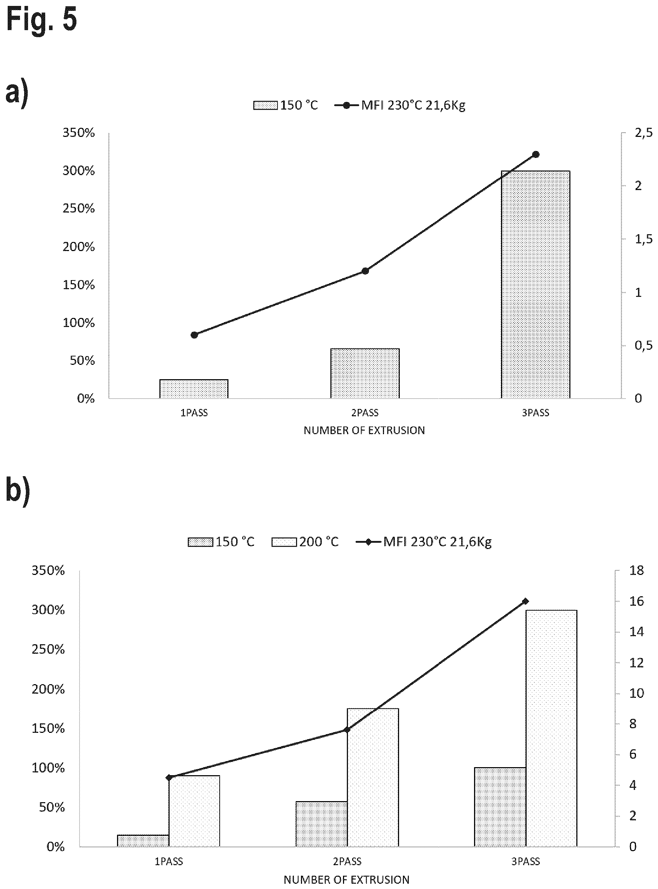

Figs. 5a and 5b show the elongation at break (left-hand axis) and MFI (righthand axis, in g/10 min) in dependency of the number of remelting steps. A remelting step includes heating the respective material, starting with the reversibly crosslinked graft polymer in the first pass, to the stated temperature and extruding the melted polymer mixture. The extruded mixture is then the starting material for the next pass.

Fig. 5a depicts the behavior of the LLDPE-2 backbone, which has been cross-linked in the presence of 0.3 wt% glycerol as polyfunctional crosslinker (b2) (molar ratio of polyfunctional crosslinker to functional groups MAH: 0.5:1 ) and 0.2 wt % isopropanol as monofunctional crosslinker (b3) (molar ratio of monofunctional crosslinker to functional groups MAH: 0.5:1).

With increasing number of passes, the MFI is recovered towards the value of the pure backbone polymer, demonstrating that the crosslinks are broken up again.

At the same time, the elongation at break increases which shows that the increase of the MFI is not linked to a thermal degradation of the polymer chains of the backbone polymer but indeed due to cleavage of the ester bonds formed between the MAH functionality grafted to the backbone polymer and the crosslinker due to the application of heat and shear.

Fig. 5b depicts the behavior of crosslinked reversibly crosslinked graft polymer which has been obtained by grafting 0.5 wt.% MAH on the POE-3 backbone polymer, which has been cross-linked in the presence of 0.3 wt. % glycerol (molar ratio of polyfunctional crosslinker to functional groups MAH: 0.6:1) and 0.2 wt.% isopropanol (molar ratio of monofunctional crosslinker to functional groups MAH: 0.6:1).

The same trend as observed for LLDPE-2 as backbone polymer is found for POE-3 as backbone polymer, highlighting the reversible bonds formed in the reversibly crosslinked graft polymer.

Furthermore, two different temperatures have been tested for reprocessing the material. At 200 °C reprocessing temperature, a more rapid increase of the elongation at break is found than at 150 °C, indicating that the reprocessing procedure can be accelerated by using higher reprocessing temperatures.

## Claims

1. A method for preparing a thermoplastic or thermoplastic elastomer composition, the method comprising the steps of:
- providing a host thermoplastic or thermoplastic elastomer as component (A);
- providing a reversibly crosslinked graft polymer as component (B), the reversibly crosslinked graft polymer being obtained by the reaction of
(b1) a graft-functionalized polymer, the graft-functionalized polymer being a reaction product of a grafting agent having one or more carboxylic acid, anhydride, epoxy and/or isocyanate functional groups and a backbone polymer; and
(b2) a di- or polyfunctional nucleophilic crosslinker selected from the group of alcohols, thiols, amines or combinations thereof; and
- mixing components (A) and (B) to form the thermoplastic or thermoplastic elastomer composition.

2. The method of claim 1, wherein the host thermoplastic or thermoplastic elastomer is selected from the group of polyolefin-based homo- and copolymers, (meth)acrylic copolymers, vinyl copolymers, styrene homo- and copolymers, thermoplastic vulcanizates, thermoplastic olefin elastomers, thermoplastic polyurethanes, thermoplastic polyamide elastomers, thermoplastic polyamides, thermoplastic polyester elastomers, thermoplastic polyesters and mixtures thereof.

3. The method of claim 1 or 2, wherein the host thermoplastic or thermoplastic elastomer is a recycled material.

4. The method according to any one of the preceding claims, wherein the grafting agent is selected from the group of maleic acid, fumaric acid, maleic anhydride, fumaric anhydride, (meth)acrylic acid, esters thereof and combinations thereof; preferably wherein the grafting agent is maleic anhydride.

5. The method according to any one of the preceding claims, wherein the backbone polymer is selected from the group of polyolefin-based homo- and copolymers, (meth)acrylic copolymers, vinyl copolymers, styrene homo- and copolymers and mixtures thereof.

6. The method of any one of the preceding claims, wherein from 0.1 to 1.5 wt.% of grafting agent are reacted with the backbone polymer to obtain the graft-functionalized polymer (b1), based on the total weight of the backbone polymer.

7. The method of any one of the preceding claims, wherein the di- or polyfunctional nucleophilic crosslinker (b2) is selected from the group of alcohols, amines or combinations thereof, more preferably wherein the di- or polyfunctional nucleophilic crosslinker is chosen from the group of alcohols.

8. The method of any one of the preceding claims, wherein the molar ratio of the nucleophilic crosslinker to carboxylic acid, anhydride, epoxy and/or isocyanate functional groups grafted to the graft-functionalized polymer is in the range of 0.01 : 1 to 30 : 1, preferably of from 0.2 : 1 to 2 : 1, more preferably of from 0.2 : 1 to 1.5 : 1.

9. The method of any one of the preceding claims, wherein the reversibly-crosslinked graft polymer has been obtained by the reaction of components (b1), (b2) and further a monofunctional nucleophilic modifying agent (b3) being selected from the group of alcohols, thiols, amines and combinations thereof, preferably wherein the monofunctional nucleophilic modifying agent (b3) is an alcohol.

10. The method of claim 9, wherein the molar ratio of the monofunctional nucleophilic modifying agent (b3) to carboxylic acid, anhydride, epoxy and/or isocyanate functional groups grafted to the graft-functionalized polymer is in the range of 0.01 : 1 to 0.2 : 1.

11. The method according to any one of the preceding claims, wherein components (A) and (B) are mixed such that component (B) is present in an amount of from 1 to 99 wt.%, preferably of from 2 to 95 wt.%, more preferably 2 to 10 wt.% or 30 to 70 wt.%, each based on the total weight components (A) and (B).

12. The method according to any one of the preceding claims, wherein the thermoplastic or thermoplastic elastomer composition is formed into an article by injection molding, blow-molding or rotational molding.

13. The method according to any one of the preceding claims, wherein the thermoplastic or thermoplastic elastomer composition is obtained as a foam.

14. The method according to any one of the preceding claims, wherein the thermoplastic or thermoplastic elastomer composition is formed into an article by an extrusion process.

15. A use of a reversibly crosslinked graft polymer as additive in a thermoplastic or thermoplastic elastomer composition further comprising a host thermoplastic or thermoplastic elastomer, the reversibly crosslinked graft polymer being obtained by the reaction of
(b1) a graft-functionalized polymer, the graft-functionalized polymer being a reaction product of a grafting agent having one or more carboxylic acid, anhydride, epoxy and/or isocyanate functional groups and a backbone polymer; and
(b2) a di- or polyfunctional nucleophilic crosslinker selected from the group of alcohols, thiols, amines or combinations thereof.
